# FASCICULE DE BREVET EUROPEEN

(11) **EP 0 526 405 B1**
(45) Date de publication et mention de la délivrance du brevet: **24.08.1994**
(21) Numéro de dépôt: 92810570.9
(22) Date de dépôt: 24.07.1992
(51) Int. Cl.: B23P 11/00

(54) **Procédé de formation d'une retenue d'une pièce circulaire dans une pièce tubulaire**
Halterungsherstellungsverfahren von einem rundförmigen Stück in ein rohrförmiges Stück
Forming process for the retention of a circular piece in a tubular piece

(30) Priorité: 02.08.1991 CH 2300/91
(43) Date de publication de la demande: 03.02.1993
(73) Titulaire: HONEYWELL LUCIFER SA, CH-1227 Carouge (Genève) (CH)
(72) Inventeur: Ramillon, Jean-Pierre, CH-1258 Perly-Certoux, Genève (CH)
(74) Mandataire: Meylan, Robert Maurice

(56) Documents cités:
- DE-A- 2 923 192
- FR-A- 2 498 494
- GB-A- 2 205 138
- SOVIET INVENTIONS ILLUSTRATED Section PQ, Week 8810, 10 Mars 1988 Derwent Publications Ltd., London, GB, Class P56, AN 88-069419/10 & SU-A-1326 420 (YAROSL ENGINE WKS)

## Description

La présente invention a pour objet un procédé de formation, dans la paroi intérieure d'une pièce cylindrique tubulaire, d'une retenue destinée à retenir une bague pour la fixation d'au moins une pièce sur une portée intérieure de la pièce tubulaire, selon lequel on amincit, sur son pourtour, la paroi de la pièce tubulaire, au niveau de l'endroit où doit être formée ladite retenue, on met en place la pièce à fixer, on place la bague sur la pièce, on déforme en au moins deux endroits la zone amincie sur la bague en utilisant la bague comme moyen de formation de la retenue et en laissant finalement la bague dans la retenue ainsi formée.

Il est bien connu de fixer une pièce circulaire dans une pièce tubulaire, par exemple une plaque de fermeture dans un alésage, au moyen d'une bague fendue engagée partiellement dans une gorge usinée dans la paroi intérieure de la pièce tubulaire. L'usinage d'une telle gorge nécessite la reprise de la pièce sur un tour. Si le coût d'une telle opération est relativement peu important pour une pièce de grande précision et d'un prix élevé, il grève par contre lourdement le prix de revient de nombreuses pièces fabriquées en grande série et à des prix relativement bas.

On connaît par ailleurs du brevet FR 2 498 494 un procédé de fabrication d'une rotule comprenant un pivot sphérique, selon lequel on fixe, avec précontrainte, un coussinet au moyen d'une rondelle de fermeture en déformant radialement la paroi d'un boîtier sur la rondelle par une opération de sertissage. La fixation obtenue est indémontable. Ce procédé n'est en outre pas applicable à la fixation d'une bague fendue destinée à pouvoir être enlevée ultérieurement en resserrant sa fente d'élasticité.

La présente invention a pour but de réaliser une retenue intérieure, en particulier une gorge intérieure apte à recevoir et maintenir une bague fendue de fixation.

Le procédé selon l'invention est caractérisé en ce que la bague est une bague fendue et en ce qu'on déforme la paroi amincie sur la bague fendue en maintenant ouverte la fente de la bague fendue, de manière à pouvoir enlever cette bague fendue ultérieurement.

La bague fendue peut être torique ou de section rectangulaire.

La retenue peut être continue ou discontinue, voire ponctuelle.

Lorsque la retenue doit être formée près d'une extrémité de la pièce tubulaire, la formation de la retenue revient à effectuer une simple opération de sertissage. Si la pièce circulaire présente un flanc tronconique, la bague peut s'appuyer directement sur ce flanc tronconique.

La zone amincie peut être formée par une gorge extérieure. Dans ce cas, la bague fendue de fixation est utilisée pour repousser vers l'extérieur la matière de la pièce tubulaire dans sa zone amincie. Ce mode d'exécution peut être utilisé pour former une gorge à n'importe quel niveau d'une pièce tubulaire.

La retenue, en particulier la gorge, ainsi obtenue présente une section parfaitement adaptée à la bague de fixation. Des moyens peuvent être prévus pour permettre l'enlèvement de la bague fendue dans certaines positions de cette bague.

Le dessin annexé représente quelques exemples de mise en oeuvre du procédé selon l'invention.

La figure 1 représente, en coupe axiale, un premier mode de mise en oeuvre, avant la formation d'une gorge.

La figure 2 représente le premier mode de mise en oeuvre après formation de la gorge.

La figure 3 est une vue en demi-coupe selon III-III de la figure 2.

La figure 4 est une coupe analogue à celle de la figure 3 représentant la bague de fixation dans une autre position angulaire.

La figure 5 représente un deuxième mode de mise en oeuvre avant formation d'une gorge.

La figure 6 représente le deuxième mode de mise en oeuvre après formation de la gorge.

La figure 7 représente un troisième mode de mise en oeuvre pour la formation d'une gorge à un endroit quelconque d'une pièce tubulaire.

La figure 8 représente une première variante du premier mode de mise en oeuvre avant formation de la retenue.

La figure 9 représente la même variante après formation de la retenue.

La figure 10 représente un exemple de bague fendue susceptible d'être enlevée depuis l'intérieur.

La figure 11 représente une seconde variante du premier mode de mise en oeuvre.

La figure 12 est une coupe selon XII-XII de la figure 11.

La figure 13 est une coupe selon XIII-XIII de la figure 11.

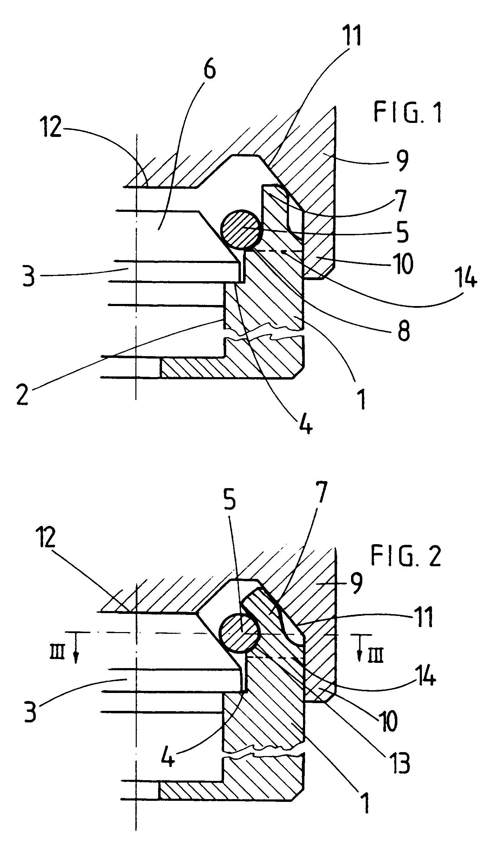

La figure 1 représente une pièce cylindrique 1, en l'occurrence un élément de vanne, présentant un alésage cylindrique 2 dont l'extrémité supérieure doit être fermée au moyen d'une pièce de fermeture 3 s'appuyant sur un épaulement 4 et maintenue contre cet épaulement par une bague torique fendue 5 en acier ou autre métal ressort s'appuyant sur le pourtour tronconique 6 de la pièce de fermeture 3. La pièce 1 est par exemple en laiton ou autre matériau suffisamment ductile.

Au dessus de l'épaulement 4, la pièce 1 présente une partie amincie 7 de diamètre intérieur supérieur au diamètre de la pièce 1 au dessus de l'épaulement 4. Cet amincissement 7 peut être formé par l'enlèvement de matière ou par une opération de roulage ou d'étampage. Dans l'exemple représenté on a formé la partie inférieure 8 d'une gorge, mais l'amincissement 7 pourrait être cylindrique jusqu'à l'épaulement 4.

Pour former la retenue, en l'occurrence une gorge, devant retenir la bague 5, on met d'abord en place la pièce de fermeture 6 sur l'épaulement 4, puis on introduit la bague 5 dans la partie amincie 7, avec ou sans prétension, selon le diamètre intérieur de la partie 7 et le diamètre de la bague 5 détendue. L'opération suivante consiste à repousser la partie amincie 7 au moyen d'un outil 9 analogue à un outil de sertissage, présentant une jupe cylindrique 10 de diamètre intérieur correspondant au diamètre de la pièce 1, une face intérieure adjacente tronconique 11 de même conicité que la partie de la pièce de fermeture 3 et une face centrale de butée 12 venant buter sur la pièce de fermeture 3 après une certaine course de l'outil 9 en limitant l'amplitude de la déformation de la partie 7 sur la bague 5. Lorsque la partie amincie 7 vient s'appuyer sur la bague fendue 5, la force exercée sur la bague fendue est perpendiculaire à la surface tronconique 6 de telle sorte que la bague fendue n'a pas tendance à se refermer en glissant sur la surface tronconique 6. On obtient ainsi, par une opération de simple sertissage, une gorge 13 parfaitement adaptée à la bague 5 et permettant d'enlever la bague 5 si nécessaire, en raison du parallélisme entre la face tronconique 6 et la partie 7 rabattue, ainsi que la pièce de fermeture 3, à condition que le diamètre intérieur de la partie 7 rabattue soit légèrement supérieur au diamètre de la pièce de fermeture 3.

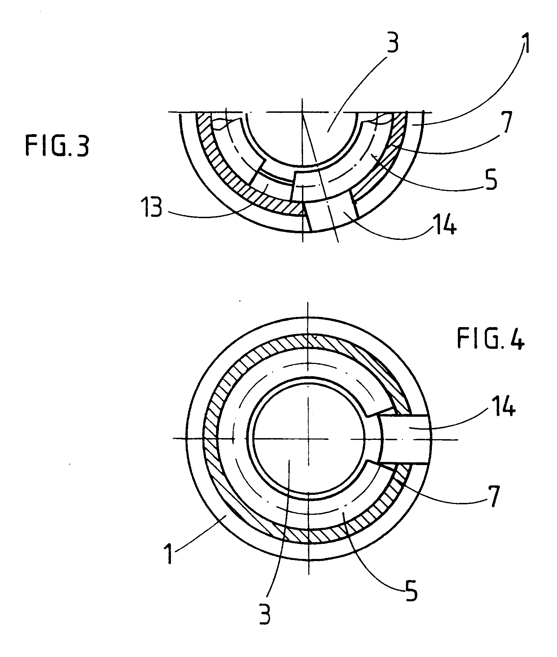

Pour permettre l'enlèvement de la bague 5, on découpe en outre une encoche 14 dans la partie amincie 7, au niveau de la gorge, comme représenté à la figure 3. Si la bague fendue 5 est disposée de telle sorte que l'une de ses extrémités est en face de l'encoche 4, comme représenté à la figure 3, il sera possible d'enlever la bague 5 en soulevant cette extrémité au moyen d'un outil, par exemple un tournevis, introduit dans l'encoche 14. Par contre, si ni l'une ni l'autre des extrémités de la bague 5 n'est en face de l'encoche 14, comme représenté à la figure 4, ou si les extrémités de la bague sont relativement éloignées de l'encoche 14, la bague 5 sera inamovible.

Ainsi la fixation pourra d'abord être démontable, par exemple pour permettre un réglage puis indémontable, par exemple dans le cas d'une garantie.

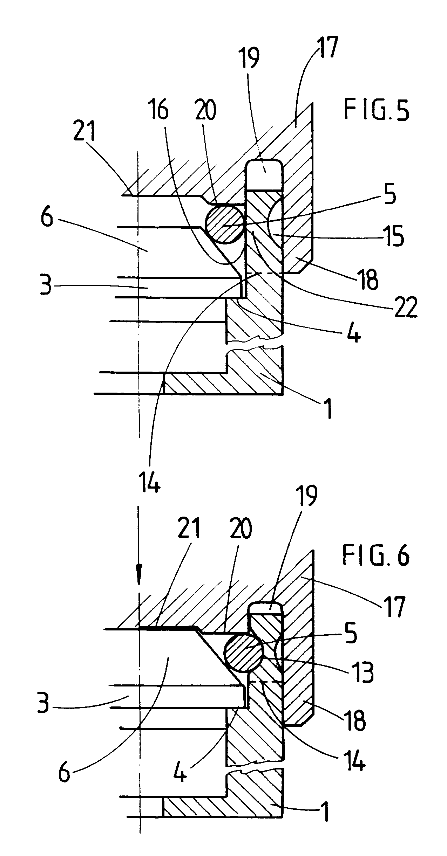

L'amincissement de la paroi du bord de la pièce 1 peut être aussi obtenu par une gorge extérieure 15, comme représenté à la figure 5, cette gorge pouvant être formée par tout procédé connu, par exemple par tournage ou roulage. La face intérieure 16 du bord de la pièce 1 est ici simplement cylindrique, d'un diamètre légèrement supérieur au diamètre de la pièce de fermeture 3.

Pour former la gorge 13, on met tout d'abord en place la pièce de fermeture 3, puis on introduit la bague fendue 5, en réduisant son diamètre, dans la partie cylindrique 16. On force ensuite la bague 5 dans la partie cylindrique 16 au moyen d'un outil 17 présentant une jupe cylindrique 18 d'un diamètre intérieur correspondant au diamètre extérieur de la pièce 1, une rainure annulaire 19 de largeur telle que le bord de la pièce 1 peut y pénétrer librement, une surface plane annulaire de poussée 20 et une face centrale de butée 21. La descente de l'outil 17 pousse la bague 5 sur le flanc tronconique 6 de la pièce de fermeture 3 et la bague 5 vient, en s'agrandissant, repousser vers l'extérieur la zone amincie 22 de la pièce 1 en formant ainsi sa gorge 13, comme représenté à la figure 6. La déformation est limitée par la surface de butée 21 qui limite la course de l'outil 17. Comme dans le premier mode d'exécution, il est possible de prévoir une encoche 14 pour l'enlèvement de la bague 5.

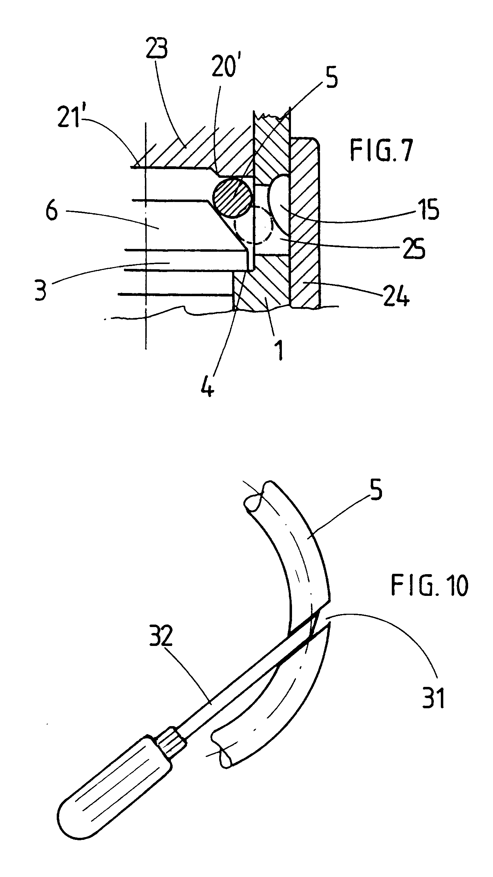

Le second mode d'exécution permet de former une gorge 13 à un niveau quelconque dans une pièce tubulaire, comme illustré par la figure 7. Il convient simplement d'utiliser un outil en deux parties, soit un poussoir 23 et une pièce cylindrique 24 jouant le rôle de contre-outil. Le poussoir 23 présente deux faces frontales 20' et 21' analogues aux faces 20 et 21 de l'outil 17. On procède de la même manière que décrit en relation avec les figures 5 et 6. Pour pouvoir enlever la bague 5, on ménage dans la paroi de la pièce 1, un trou 25 au niveau de la gorge 13.

Le premier mode de mise en oeuvre du procédé permet également la fixation d'une pièce circulaire plane, c'est-à-dire ne présentant pas de flanc tronconique, en forme de disque ou annulaire.

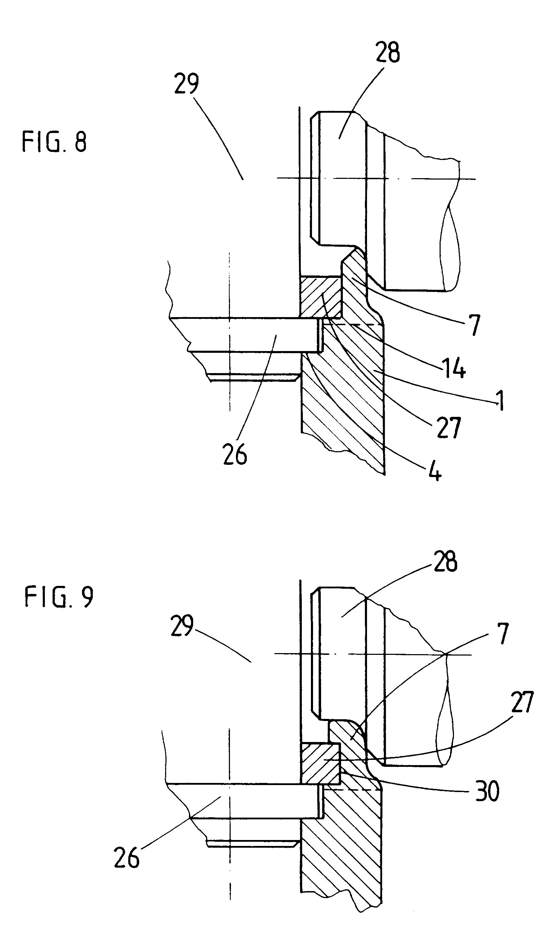

Un exemple est représenté aux figures 8 et 9. La pièce à fixer est une pièce de fermeture plane 26, que l'on désire fixer au moyen d'une bague fendue 27 de section carrée. L'amincissement 7 s'étend au moins jusqu'au niveau de la pièce de fermeture 26. L'outil est constitué d'un outil de sertissage 28 et d'une pièce cylindrique 29 de diamètre tel qu'elle peut être introduite dans la bague 27 pour maintenir celle-ci ouverte pendant l'opération de sertissage représentée à la figure 9. On obtient ainsi une gorge 30 de section rectangulaire.

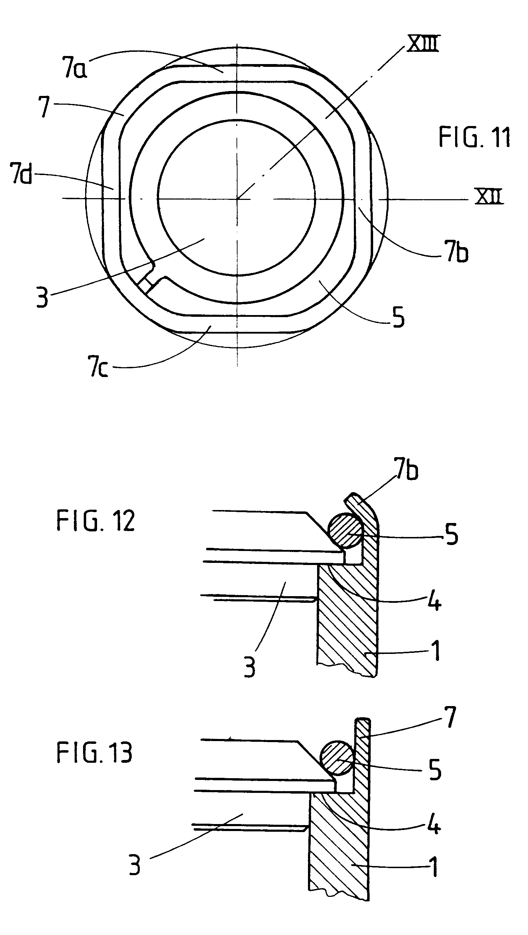

L'enlèvement de la bague fendue, notamment dans le cas de la fixation d'une pièce plane, peut également se faire par l'intérieur en utilisant une bague présentant une fente oblique 31 (figure 10) à la place d'une fente radiale. Cette fente oblique permet l'introduction d'un outil, par exemple un tournevis 32, afin de sortir une extrémité de la bague de la retenue.

Il n'est pas nécessaire de former la retenue sur tout le pourtour de la pièce tubulaire, mais il suffit de la former en au moins deux endroits diamétralement opposés ou au moins trois points équidistants.

Les figures 11 à 13 représentent un exemple de retenue discontinue. Les éléments de départ sont les mêmes qu'à la figure 1, mais sans l'encoche 14. La partie amincie 7 est repoussée sur la bague 5 sur quatre sections 7a, 7b, 7c et 7d de façon rectiligne Entre ces sections s'étendent donc des parties n'ayant subi aucune déformation, comme représenté à la figure 13. Si l'une des extrémités de la bague fendue 5 est dans une partie non déformée, comme représenté à la figure 11, la bague est amovible. Si par contre les deux extrémités de la bague fendue sont situées au moins approximativement au milieu d'une section déformée, la bague est inamovible.

## Revendications

1. Procédé de formation, dans la paroi intérieure d'une pièce cylindrique tubulaire (1) d'une retenue (13; 30) destinée à recevoir une bague (5; 27) pour la fixation d'au moins une pièce (3; 26) sur une portée intérieure (4) de la pièce tubulaire, selon lequel on amincit, sur son pourtour (7; 22), la paroi de la pièce tubulaire, au niveau de l'endroit où doit être formée ladite retenue, on met en place la pièce à fixer (3; 26), on place la bague (5; 27) sur la pièce, on déforme en au moins deux endroits la zone amincie sur la bague en utilisant la bague comme moyen de formation de la retenue et en laissant finalement la bague dans la retenue (13; 30) ainsi formée, caractérisé en ce que la bague (5; 27) est une bague fendue et en ce qu'on déforme la paroi amincie (7; 22) sur la bague fendue en maintenant ouverte la fente de la bague fendue, de manière à pouvoir enlever cette bague fendue ultérieurement.

2. Procédé de formation selon la revendication 1, pour la formation d'une retenue destinée à recevoir une bague fendue (5) fixant une pièce de fermeture présentant un pourtour au moins partiellement tronconique (6), caractérisé en ce qu'on utilise ledit pourtour tronconique (6) pour retenir la bague fendue (5) pendant la déformation de ladite paroi amincie (7) sur la bague fendue au moyen d'un outil (9) présentant une face de travail (11) tronconique de même conicité que le pourtour tronconique (6) de la pièce de fermeture.

3. Procédé de formation selon la revendication 1, pour la formation d'une retenue destinée à recevoir une bague fendue (5) fixant une pièce de fermeture (3) présentant une partie tronconique (6), caractérisé en ce qu'on réalise l'amincissement (22) de la paroi de la pièce tubulaire par une gorge extérieure (15), qu'on resserre la bague fendue (5) pour l'introduire dans la pièce tubulaire et qu'on pousse cette bague sur la partie tronconique de la pièce de fermeture de manière à repousser la paroi de la pièce tubulaire dans sa zone amincie en retenant extérieurement la pièce tubulaire de part et d'autre de la gorge extérieure.

4. Procédé de formation selon la revendication 3, caractérisé en ce que la gorge extérieure (15) est formée près du bord de la pièce tubulaire.

5. Procédé de formation selon la revendication 3, caractérisé en ce que la gorge extérieure (15) est formée à un niveau quelconque de la pièce tubulaire.

6. Procédé de formation selon la revendication 1, pour la formation d'une retenue (30) destinée à recevoir une bague fendue (27) fixant une pièce plane (26), caractérisé en ce qu'on introduit dans la bague fendue une pièce cylindrique (29) pour maintenir la bague fendue ouverte pendant que l'on déforme la paroi amincie (7) sur la bague fendue par une opération de sertissage.

7. Procédé de formation selon l'une quelconque des revendications 1 à 6, caractérisé en ce qu'on exécute une encoche (14) ou un trou (25) dans la paroi de la pièce tubulaire, au niveau de la gorge à former, encoche ou trou destiné à l'enlèvement de la bague fendue.

8. Fixation d'une pièce circulaire (3 ; 26) dans une pièce tubulaire cylindrique (1) au moyen d'une bague fendue (5; 27) retenue dans une retenue intérieure (13; 30) de la pièce tubulaire, formée par le procédé selon l'une des revendications 1 à 7.

9. Fixation selon la revendication 8, caractérisée en ce que la pièce circulaire (3 ; 26) est une pièce de fermeture.

10. Fixation selon la revendication 8 ou 9, caractérisée en ce que la retenue (13; 30) présente une encoche (14) ou un trou (25) permettant d'enlever la bague fendue lorsque l'une des extrémités de la bague est en face de l'encoche, respectivement du trou.

11. Fixation selon la revendication 8 ou 9, caractérisée en ce que la bague fendue présente une fente (31) oblique relativement au rayon de la bague passant par le milieu de la fente.

12. Fixation selon l'une des revendications 8 à 11, caractérisée en ce que le diamètre intérieur de la zone déformée est supérieur au diamètre de ladite pièce circulaire (3 ; 26).

## Claims

1. A method for forming, in the internal wall of a tubular cylindrical part, a restraint intended to receive a ring for fixing at least one part on an internal bearing surface of the tubular part, according to which the wall of the tubular part is thinned, on its perimeter, in the region of the place where said restraint is to be formed, the part to be fixed is put in place, the ring is put in place on the part, the thinned zone is deformed in at least two places on the ring using the ring as a means for forming the restraint and finally leaving the ring in the restraint which is thus formed, wherein the ring is a split ring and wherein the thinned wall is deformed over the split ring holding the slit of the split ring open, in such a manner as to be able to remove this split ring at a later date.

2. The forming method as claimed in claim 1, for forming a restraint intended to receive a split ring fixing a closure part having an at least partially frustoconical perimeter, wherein said frustoconical perimeter is used to retain the split ring during the deformation of said thinned wall over the split ring by means of a tool having a frustoconical working face of the same conicity as the frustoconical perimeter of the closure part.

3. The forming method as claimed in claim 1, for forming a restraint intended to receive a split ring fixing a closure part having a frustoconical portion, wherein the thinning of the wall of the tubular part is achieved by an external groove, wherein the split ring is tightened in order to introduce it into the tubular part and wherein this ring is pushed onto the frustoconical portion of the closure part in such a manner as to push down the wall of the tubular part in its thinned zone whilst externally retaining the tubular part on either side of the external groove.

4. The forming method as claimed in claim 3, wherein the external groove is formed near to the edge of the tubular part.

5. The forming method as claimed in claim 3, wherein the external groove is formed in any region of the tubular part.

6. The forming method as claimed in claim 1, for forming a restraint intended to receive a split ring fixing a flat part, wherein a cylindrical part is introduced into the split ring in order to hold the split ring open whilst the thinned wall is deformed over the split ring by a crimping operation.

7. The forming method as claimed in any one of claims 1 to 6, wherein a notch or a hole is made in the wall of the tubular part, in the region of the groove to be formed, which notch or hole is intended for the removal of the split ring.

8. A fixing of a circular part in a cylindrical tubular part 1 by means of a split ring retained in an internal restraint of the tubular part, wherein the restraint is formed by the method as claimed in one of claims 1 to 7.

9. The fixing as claimed in claim 8, wherein the circular part is a closure part.

10. The fixing as claimed in claim 8 or 9, wherein the restraint has a notch or hole making it possible to remove the split ring when one of the ends of the ring is opposite the notch, or hole respectively.

11. The fixing as claimed in claim 8 or 9, wherein the split ring has a slit which is oblique relative to the radius of the ring passing through the middle of the slit.

12. The fixing as claimed in one of claims 8 to 11, wherein the internal diameter of the deformed zone is greater than the diameter of said circular part.

## Patentansprüche

1. Verfahren zur Herstellung einer Halterung (13, 30) in der Innenwand eines zylindrischen, rohrförmigen Stückes (1), die dazu bestimmt ist, einen Ring (5, 27) aufzunehmen, um wenigstens ein Teil (3, 26) auf einem inneren Sitz (4) des rohrförmigen Stückes festzuhalten, in dem die Wand des rohrförmigen Stückes rundherum (7, 22) an der Höhe der Stelle, wo die genannte Halterung gebildet werden soll, verjüngt wird, das zu festhaltende Teil (3, 26) eingesetzt wird, der Ring (5, 27) auf das Teil gelegt wird, an wenigstens zwei Stellen die verjüngte Zone auf dem Ring verformt wird, indem der Ring als Bildungsmittel der Halterung verwendet wird und schliesslich der Ring in der so gebildeten Halterung (13, 30) gelassen wird, dadurch gekennzeichnet, dass der Ring (5, 27) ein gespaltener Ring ist und dass die verjüngte Wand (7, 22) auf dem gespaltenen Ring verformt wird, indem der Spalt des gespaltenen Ringes offengehalten wird, in solcher Weise, dass dieser gespaltene Ring zu einem späteren Zeitpunkt entfernt werden kann.

2. Herstellungsverfahren gemäss Anspruch 1, zur Herstellung einer Halterung, die dazu bestimmt ist, einen gespaltenen Ring (5) aufzunehmen, welcher ein Verschlussteil festhält, das einen wenigstens teilweise abgestumpften kegelförmigen Umfang (6) aufweist, dadurch gekennzeichnet, dass man den genannten abgestumpften kegelförmigen Umfang verwendet, um den gespaltenen Ring (5) während der Verformung der genannten verjüngten Wand (7) auf den gespaltenen Ring mittels eines Werkzeuges (9) zurückhält, welches eine
abgestumpfte kegelförmige Arbeitsfläche (11) aufweist, welche die selbe Konizität als der abgestumpfte kegelförmige Umfang (6) des Verschlussteiles aufweist.

3. Herstellungsverfahren gemäss Anspruch 1, zur Herstellung einer Halterung, die dazu bestimmt ist, einen gespaltenen Ring (5) aufzunehmen, welcher ein Verschlussteil (3), das ein stumpfkegelförmiges Teil (6) besitzt, festhält, dadurch gekennzeichnet, dass man die Verjüngung (22) der Wand des rohrförmigen Stückes durch eine äussere Rinne (15) herstellt, dass man den gespaltenen Ring (5) verengt, um ihn in das rohrförmige Stück einzusetzen und dass man diesen Ring auf das stumpfkeglige Teil des Verschlussteiles in solcher Weise drückt, dass man die Wand des rohrförmigen Stückes in seiner verjüngten Zone zurückdrängt, während man von aussen her das rohrförmige Stück beiderseits der äusseren Rinne zurückhält.

4. Herstellungsverfahren gemäss Anspruch 3, dadurch gekennzeichnet, dass die äussere Rinne (15) nahe des Randes des rohrförmigen Stückes gebildet wird.

5. Herstellungsverfahren gemäss Anspruch 3, dadurch gekennzeichnet, dass die äussere Rinne (15) an einer frei auswählbaren Höhe des rohrförmigen Stückes gebildet wird.

6. Herstellungsverfahren gemäss Anspruch 1, zur Herstellung einer Halterung (30), die dazu bestimmt ist, einen gespaltenen Ring (27) aufzunehmen, der ein Flachstück (26) festhält, dadurch gekennzeichnet, dass man in den gespaltenen Ring ein zylindrisches Stück (29) einfügt, um den gespaltenen Ring offen zu halten, während man die verjüngte Wand (7) auf dem gespaltenen Ring durch ein Fassungsverfahrensschritt verformt.

7. Herstellungsverfahren gemäss irgend einem der Ansprüche 1 bis 6, dadurch gekennzeichnet, dass ein Einschnitt (14) oder ein Loch (25) in der Wand des rohrförmigen Stückes gebildet wird, in der Höhe der zu bildenden Rinne, wobei der Einschnitt oder das Loch zur Entfernung des gespaltenen Ringes bestimmt ist.

8. Befestigung eines kreisrunden Stückes (3, 26) in einem zylindrischen, rohrförmigen Stück (1) mittels eines gespaltenen Ringes (5, 27), der in einer inneren Halterung (13, 30) des rohrförmigen Stückes gehalten wird, welche durch ein Verfahren gemäss einem der Ansprüche 1 bis 7 hergestellt ist.

9. Befestigung gemäss Anspruch 8, dadurch gekennzeichnet, dass das kreisrunde Stück (3, 26) ein Verschlusstück ist.

10. Befestigung gemäss Anspruch 8 oder 9, dadurch gekennzeichnet, dass die Halterung (13, 30) einen Einschnitt (14) oder Einlauf (25) aufweist, welches das Entfernen des gespaltenen Ringes erlaubt, wenn das eine Ende des Ringes gegenüber des Einschnittes oder des Loches liegt

11. Befestigung gemäss Anspruch 8 oder 9, dadurch gekennzeichnet, dass der gespaltene Ring einen Schlitz (31) aufweist, der schräg zum Radius des Ringes der durch die Mitte des Schlitzes führt, liegt.

12. Befestigung gemäss einem der Ansprüche 8 bis 11, dadurch gekennzeichnet, dass der innere Durchmesser der verformten Zone grösser ist als der Durchmesser des genannten kreisrunden Stückes (3, 26).
